# EUROPEAN PATENT SPECIFICATION

(11) **EP 4 446 181 B1**
(45) Date of publication and mention of the grant of the patent: **31.12.2025**
(21) Application number: 24169516.2
(22) Date of filing: 10.04.2024
(51) Int. Cl.: B60T 8/17

(54) **ELECTRO-HYDROSTATIC BRAKE ACTUATORS FOR BRAKING AND PARKING**
ELEKTROHYDROSTATISCHE BREMSAKTUATOREN ZUM ABBREMSEN UND EINPARKEN
ACTIONNEURS DE FREINAGE ÉLECTRO-HYDROSTATIQUES POUR FREINAGE ET STATIONNEMENT

(30) Priority: 10.04.2023 US 202318297895
(43) Date of publication of application: 16.10.2024
(73) Proprietor: Goodrich Corporation, Charlotte, NC 28217-4578 (US)
(72) Inventor: WANG, Longke, Glastonbury, CT (US); KLODE, Harald, Centerville, OH, 45458 (US); MARTIN, James M., Dayton, OH, 45414 (US); MOON, Suk-Min, Greenwood, IN, 46143 (US); GEORGIN, Marc J., Oakwood, OH, 45419 (US); THAPA MAGAR, Kaman, Beavercreek, OH, 45431 (US); ILAK, Milos, Hoboken, NJ (US)
(74) Representative: Dehns

(56) References cited:
- EP-B1- 1 871 649
- US-A1- 2010 090 058
- US-A1- 2023 083 075
- US-B2- 7 273 136
- US-B2- 9 925 964

## Description

### FIELD

The present disclosure generally relates to aircraft wheel and brake systems, and more specifically, to electro-hydrostatic brake actuators for braking and parking.

### BACKGROUND

Aircraft typically utilize brake systems on wheels to slow or stop the aircraft during landings, taxiing, and rejected takeoffs. The brake systems generally employ a brake stack including a series of friction disks that may be forced into sliding contact with one another during brake actuation to slow or stop the aircraft. Brake systems are typically either hydraulic or electric. Generally, electric brakes are heavier than the hydraulic versions, in part due to additional complexities of the electric brake actuators and parking brake mechanisms within the electric brake actuators. Accordingly, instead of using hydraulic oil as media to transfer power to a linear cylinder, electro-mechanical brakes use a direct mechanical linkage between an electric motor and a linear cylinder. Electro-Mechanical Actuators (EMA) offer advantages including electrification, high energetic efficiency, but inevitably have disadvantages including short life cycles, high costs etc., especially when compared with their counterparts, Hydraulic-Actuators (HA). Electro-Hydrostatic Actuators (EHA), which are similar to EMAs, use hydraulic fluids as media to convert rotary motion into linear motion. US2010/090058A1 and EP1871649B1 relate to brake systems.

### SUMMARY

The invention concerns a brake system according to claim 1. The brake system includes a motor, a hydraulic pump mechanically coupled to the motor, a directional control valve fluidly coupled to the hydraulic pump, and a brake assembly fluidly coupled to the directional control valve. The directional control valve is moveable between a braking position, in which the directional control valve allows hydraulic fluid to flow between the hydraulic pump and the brake assembly, and a parking position, in which the directional control valve prevents the hydraulic fluid from flowing between the hydraulic pump and the brake assembly.

According to the invention, responsive to a first command from a brake control unit, the motor is configured to cause the brake assembly to apply a braking force by rotating the hydraulic pump in a first direction to pump the hydraulic fluid to the brake assembly via the directional control valve when the directional control valve is in the braking position. In various embodiments, responsive to a second command from the brake control unit, the motor is configured to cause the brake assembly to release the braking force by rotating the hydraulic pump in a second direction to pump the hydraulic fluid from the brake assembly to a hydraulic fluid flow source via the directional control valve when the directional control valve is in the braking position.

In various embodiments, the brake system further includes a charging control valve fluidly coupled to the hydraulic pump, and an accumulator fluidly coupled to the charging control valve. In various embodiments, responsive to the hydraulic pump rotating in a first direction and a hydraulic pressure in the accumulator being below a first predetermined accumulator pressure, the charging control valve is configured to be in a charging position allowing the hydraulic fluid to flow into and accumulate in the accumulator.

In various embodiments, responsive to the hydraulic pressure in the accumulator being at or above the first predetermined accumulator pressure or to prevent the accumulator being charged, the charging control valve is configured to be in a blocked position preventing the hydraulic fluid into the accumulator.

In various embodiments, the brake system further includes a first relief valve comprising a first port and a second port. In various embodiments, the first port is fluidly coupled to a first conduit between the hydraulic pump and the directional control valve. In various embodiments, the second port is fluidly coupled to a second conduit between the hydraulic pump and a hydraulic fluid flow source. In various embodiments, responsive to energy of a hydraulic pressure pushing around a pilot line of the first relief valve increasing and overcoming a spring force of the first relief valve, the first relief valve is configured to open allowing the hydraulic fluid to flow from the hydraulic pump and the directional control valve to the hydraulic fluid flow source

In various embodiments, the brake system further includes an accumulator fluidly coupled to the directional control valve. In various embodiments, the directional control valve is configured to fluidly couple the accumulator to the brake assembly in the parking position to allow the accumulator to provide a constant hydraulic pressure to the brake assembly based on a hydraulic fluid pressure in the accumulator.

In various embodiments, the brake system further includes a second relief valve including a first port and a second port. In various embodiments, the first port is fluidly coupled to a first conduit between the accumulator and the directional control valve. In various embodiments, the second port is fluidly coupled to a second conduit between the hydraulic pump and a hydraulic fluid flow source. In various embodiments, responsive to energy of a hydraulic pressure pushing around a pilot line of the second relief valve increasing and overcoming a spring force of the second relief valve, the second relief valve is configured to open allowing the hydraulic fluid to flow from the accumulator and the directional control valve to the hydraulic fluid flow source.

In various embodiments, the brake system further includes an expandible/compressible hose fluidly coupled between the directional control valve and the brake assembly. In various embodiments, responsive to the directional control valve moving to a parking position, the expandible/compressible hose, in an expanded configuration, is configured to provide a constant hydraulic pressure to the brake assembly via a compression of the expandible/compressible hose.

In various embodiments, the brake system further includes a servo flow-control valve including a first port and a second port. In various embodiments, the first port is fluidly coupled to the hydraulic pump and the directional control valve. In various embodiments, the second port is fluidly coupled to the hydraulic fluid flow source. In various embodiments, in response to receiving a command by the brake control unit, a servo flow-control valve is configured to allow a portion of hydraulic fluid flow being pumped by the hydraulic pump to the brake assembly to flow to the hydraulic fluid flow source or to allow a portion of hydraulic fluid flow being drained from the brake assembly via the directional control valve to flow to the hydraulic fluid flow source.

In various embodiments, the brake system further includes a check valve including a first port and a second port. In various embodiments, the first port is fluidly coupled to the hydraulic pump and the directional control valve. In various embodiments, the second port is fluidly coupled to the hydraulic fluid flow source. In various embodiments, the check valve is a one-way valve configured to allow a flow of hydraulic fluid from the hydraulic fluid flow source to the hydraulic pump and the directional control valve while preventing the flow of hydraulic fluid from the directional control valve and the hydraulic pump to the hydraulic fluid flow source.

Also disclosed herein is an aircraft. The aircraft includes a wheel and a brake system coupled to the wheel. The brake system includes a motor, a hydraulic pump mechanically coupled to the motor, a directional control valve fluidly coupled to the hydraulic pump, and a brake assembly fluidly coupled to the directional control valve. The directional control valve is moveable between a braking position, in which the directional control valve allows hydraulic fluid to flow between the hydraulic pump and the brake assembly, and a parking position, in which the directional control valve prevents the hydraulic fluid from flowing between the hydraulic pump and the brake assembly.

In various embodiments, responsive to a first command from a brake control unit, the motor is configured to cause the brake assembly to apply a braking force by rotating the hydraulic pump in a first direction to pump the hydraulic fluid to the brake assembly via the directional control valve when the directional control valve is in the braking position. In various embodiments, responsive to a second command from the brake control unit, the motor is configured to cause the brake assembly to release the braking force by rotating the hydraulic pump in a second direction to pump the hydraulic fluid from the brake assembly to a hydraulic fluid flow source via the directional control valve when the directional control valve is in the braking position.

In various embodiments, the brake system further includes a charging control valve fluidly coupled to the hydraulic pump, and an accumulator fluidly coupled to the charging control valve. In various embodiments, responsive to the hydraulic pump rotating in a first direction and a hydraulic pressure in the accumulator being below a first predetermined accumulator pressure, the charging control valve is configured to be in a charging position allowing the hydraulic fluid to flow into and accumulate in the accumulator.

In various embodiments, responsive to the hydraulic pressure in the accumulator being at or above the first predetermined accumulator pressure or to prevent the accumulator being charged, the charging control valve is configured to be in a block position preventing the hydraulic fluid into the accumulator.

In various embodiments, the brake system further includes a first relief valve including a first port and a second port. In various embodiments, the first port is fluidly coupled to a first conduit between the hydraulic pump and the directional control valve. In various embodiments, the second port is fluidly coupled to a second conduit between the hydraulic pump and a hydraulic fluid flow source. In various embodiments, responsive to energy of a hydraulic pressure pushing around a pilot line of the first relief valve increasing and overcoming a spring force of the first relief valve, the first relief valve is configured to open allowing the hydraulic fluid to flow from the hydraulic pump and the directional control valve to the hydraulic fluid flow source.

In various embodiments, the brake system further includes an accumulator fluidly coupled to the directional control valve. In various embodiments, the directional control valve is configured to fluidly couple the accumulator to the brake assembly in the parking position to allow the accumulator to provide a constant hydraulic pressure to the brake assembly based on a hydraulic fluid pressure in the accumulator.

In various embodiments, the brake system further includes a second relief valve including a first port and a second port. In various embodiments, the first port is fluidly coupled to a first conduit between the accumulator and the directional control valve. In various embodiments, the second port is fluidly coupled to a second conduit between the hydraulic pump and a hydraulic fluid flow source. In various embodiments, responsive to energy of a hydraulic pressure pushing around a pilot line of the second relief valve increasing and overcoming a spring force of the second relief valve, the second relief valve is configured to open allowing the hydraulic fluid to flow from the accumulator and the directional control valve to the hydraulic fluid flow source.

In various embodiments, the brake system further includes an expandible/compressible hose fluidly coupled between the directional control valve and the brake assembly. In various embodiments, responsive to the directional control valve moving to a parking position, the expandible/compressible hose, in an expanded configuration, is configured to provide a constant hydraulic pressure to the brake assembly via a compression of the expandible/compressible hose.

In various embodiments, the brake system further includes a servo flow-control valve including a first port and a second port. In various embodiments, the first port is fluidly coupled to the hydraulic pump and the directional control valve. In various embodiments, the second port is fluidly coupled to the hydraulic fluid flow source. In various embodiments, in response to receiving a command by the brake control unit, a servo flow-control valve is configured to allow a portion of hydraulic fluid flow being pumped by the hydraulic pump to the brake assembly to flow to the hydraulic fluid flow source or to allow a portion of hydraulic fluid flow being drained from the brake assembly via the directional control valve to flow to the hydraulic fluid flow source.

In various embodiments, the brake system further includes a check valve including a first port and a second port. In various embodiments, the first port is fluidly coupled to the hydraulic pump and the directional control valve. In various embodiments, the second port is fluidly coupled to the hydraulic fluid flow source. In various embodiments, the check valve is a one-way valve configured to allow a flow of hydraulic fluid from the hydraulic fluid flow source to the hydraulic pump and the directional control valve while preventing the flow of hydraulic fluid from the directional control valve and the hydraulic pump to the hydraulic fluid flow source.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1A illustrates an aircraft having a brake system, in accordance with various embodiments.
FIG. 1B illustrates a cross-sectional view of a brake assembly, in accordance with various embodiments.
FIG. 2 illustrates a braking system, in accordance with various embodiments.
FIG. 3 illustrates a braking system, in accordance with various embodiments.
FIG. 4 illustrates a braking system, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Disclosed herein, in accordance with various embodiments, is an electro-hydrostatic-actuator (EHA) braking system in which both of hydraulic and electric actuation technologies are integrated. In various embodiments, the EHA braking system includes an electric motor, a hydraulic pump, and a landing brake assembly. In various embodiments, the EHA braking system further includes hydraulic hoses and secondary valves, among other components. Responsive to a command to apply a brake or release the brake, in various embodiments, the electric motor is commanded to drive the hydraulic pump to either feed hydraulic oil into or drain hydraulic oil from brake cylinders of the brake assembly such that brake is either applied or released. In various embodiments, a parking control unit of the EHA braking system is equipped to pre-store energy which may be applied for parking brake when the electric motor is no longer commanded to drive the hydraulic pump.

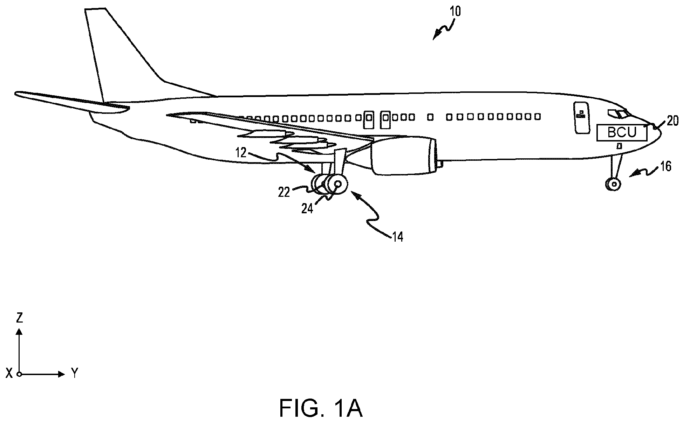

Referring to Figure 1A, in accordance with various embodiments, an aircraft 10 is illustrated. The aircraft 10 includes landing gear, which may include a left main landing gear 12, a right main landing gear 14 and a nose landing gear 16. The landing gear support the aircraft 10 when it is not flying, allowing the aircraft 10 to taxi, take off, and land without damage. While the disclosure refers to the three landing gear configurations just referred, the disclosure nevertheless contemplates any number of landing gear configurations.

Aircraft 10 may further include a brake control unit (BCU) 20 for controlling a left main brake mechanism 22 of left main landing gear 12 and a right main brake mechanism 24 of right main landing gear 14. BCU 20 controls the application of brake mechanisms 22, 24 in response to input from aircraft 10 or an authorized user. BCU 20 further controls a parking brake functionality of brake mechanisms 22, 24 to secure aircraft 10 in place. A plurality of wires that independently control the braking and parking brake functionalities run through aircraft 10 from BCU 20 to left main brake mechanism 22 and right main brake mechanism 24.

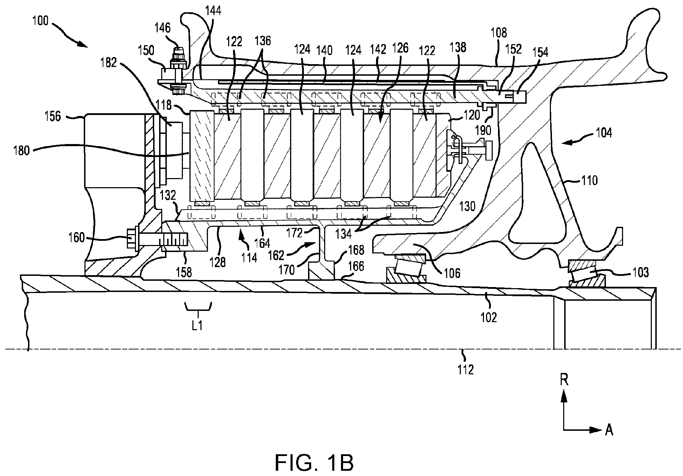

Referring now to Figure 1B, there is schematically depicted a brake mechanism 100 that may be used by the aircraft 10 of Figure 1A or any other appropriate aircraft. Brake mechanism 100 may be an example of left main brake mechanism 22 and/or right main brake mechanism 24 described above with respect to FIG. 1A. Brake mechanism 100 is mounted on an axle 102 for use with a wheel 104 disposed on and configured to rotate about axle 102 via one or more bearing assemblies 103. Wheel 104 includes a hub 106, a wheel well 108 concentric about hub 106 and a web portion 110 interconnecting the hub 106 and the wheel well 108. A central axis 112 extends through axle 102 and defines a center of rotation of wheel 104. A torque plate barrel 114 (sometimes referred to as a torque tube or barrel or a torque plate or back leg) is aligned concentrically with hub 106, and wheel 104 is rotatable relative to torque plate barrel 114.

Brake mechanism 100 includes a set of hydraulic actuators (HAs), typically between 4 and 16, one of which is illustrated as HA 182, a pressure plate 118 disposed adjacent the HA 182, an end plate 120 positioned a distal location from the HA 182, and a plurality of rotor disks 122 interleaved with a plurality of stator disks 124 positioned intermediate to the pressure plate 118 and the end plate 120. Pressure plate 118, the plurality of rotor disks 122, the plurality of stator disks 124, and end plate 120 together form a brake heat sink or brake stack 126. Pressure plate 118, end plate 120, and the plurality of stator disks 124 are mounted to torque plate barrel 114 and remain rotationally stationary relative to axle 102.

Torque plate barrel 114 may include an annular barrel or torque tube 128 and an annular plate or back leg 130. Back leg 130 is disposed at an end distal from HA 182 and may be made monolithic with torque tube 128, as illustrated in Figure 1B, or may be made as a separate annular piece and suitably connected to torque tube 128. Torque tube 128 has a plurality of circumferentially spaced and axially extending splines 132 disposed on an outer surface of the torque tube 128. The plurality of stator disks 124 and pressure plate 118 include notches or stator slots 134 on an inner periphery of the disks and the plate for engagement with splines 132, such that each disk and the plate are axially slidable with respect to torque tube 128.

End plate 120 is suitably connected to back leg 130 of torque plate barrel 114 and is held non-rotatable, together with the plurality of stator disks 124 and pressure plate 118, during a braking action. The braking action may include HA 182 applying an amount of force between 0% and 100% of available EHA force to pressure plate 118. In that regard, the EHA system provides a pressure that may vary from 0 to 100%, for example 3000 psi. The HA 182 is pressurized and configured to apply forces to the to pressure plate 118 in proportion to the pressure supplied by the EHA. The plurality of rotor disks 122, interleaved between pressure plate 118, end plate 120, and the plurality of stator disks 124, each have a plurality of circumferentially spaced notches or rotor lugs 136 along an outer periphery of each disk for engagement with a plurality of torque bars 138 that are secured to or made monolithic with an inner periphery of wheel 104.

An actuating mechanism for the brake mechanism 100 includes a plurality of Has circumferentially spaced around an annular brake housing 156 (only one HA, HA 182, is illustrated in Figure 1B). Upon actuation, the plurality of Has affects a braking action by urging the pressure plate 118 and the plurality of stator disks 124 into frictional engagement with the plurality of rotor disks 122 and against end plate 120. Each of the plurality of Has (e.g., HA 182, etc.) includes a ram 180 configured to engage pressure plate 118 by extending a length, or distance, L1. An electric power is applied to the EHA to actuate the plurality of Has, such as HA 182) causing ram 180 to extend and engage pressure plate 118. In various embodiments, the ram extension length may be proportional to an amount of braking force applied by brake mechanism. Through compression of the plurality of rotor disks 122 and the plurality of stator disks 124 between pressure plate 118 and end plate 120, the resulting frictional contact slows or stops or otherwise prevents rotation of wheel 104. The plurality of rotor disks 122 and the plurality of stator disks 124 are fabricated from various materials, such as carbon matrix composites, that enable the brake disks to withstand and dissipate the heat generated during and following a braking action.

Torque plate barrel 114 is secured to a stationary portion of the landing gear such as axle 102, preventing the torque plate barrel 114 and the plurality of stator disks 124 from rotating during braking of the aircraft. Torque tube 128 portion of torque plate barrel 114 may be attached to annular brake housing 156 via an annular mounting surface 158, where bolt fasteners 160 secure torque plate barrel 114 to annular brake housing 156. A spacer member or pedestal 162 is positioned between an inner diameter surface 164 of torque tube 128 and an outer diameter surface 166 of axle 102. Pedestal 162 includes a radially inner surface or foot 168 for engaging the axle 102, a web portion 170 radially outward of foot 168, and a head portion 172 for engaging inner diameter surface 164 of torque tube 128. Pedestal 162 augments support of torque plate barrel 114 within brake mechanism 100 generally and, more particularly, against axle 102. Pedestal 162 may be made monolithic with torque tube 128 portion of torque plate barrel 114.

A heat shield 140 is secured directly or indirectly to wheel 104 between a radially inward surface of wheel well 108 and the plurality of torque bars 138. As illustrated in Figure 1B, heat shield 140 is concentric with wheel well 108 and may have a plurality of heat shield sections 142 disposed between respective, adjacent pairs of the plurality of torque bars 138. Heat shield 140, or heat shield sections 142, is spaced from the radially inward surface of wheel well 108 and secured in place by heat shield tabs 190, such that heat shield 140, or heat shield sections 142, is disposed generally parallel to the axis of rotation or central axis 112 of wheel 104 and intermediate the plurality of torque bars 138 and the radially inward surface of wheel well 108. In various embodiments, including for heavy-duty applications, heat shield 140, or heat shield sections 142, may be further secured in place by heat shield carriers 144.

The plurality of torque bars 138 is attached at axially inboard ends to the wheel 104 by torque bar bolts 146. Torque bar bolts 146 extend through respective holes in a flange 150 provided on wheel 104 as shown, which flange 150 for purposes of the present description is intended to be considered as part of wheel well 108. Each of the plurality of torque bars 138 may include a pin 152 or similar member at its axially outboard end (i.e., the end opposite the torque bar bolts 146) that is received within a hole 154 disposed proximate the web portion 110 of the wheel 104. Heat shield 140, or heat shield sections 142, is positioned adjacent a radially inward surface of wheel well 108 and secured in place by heat shield tabs 190.

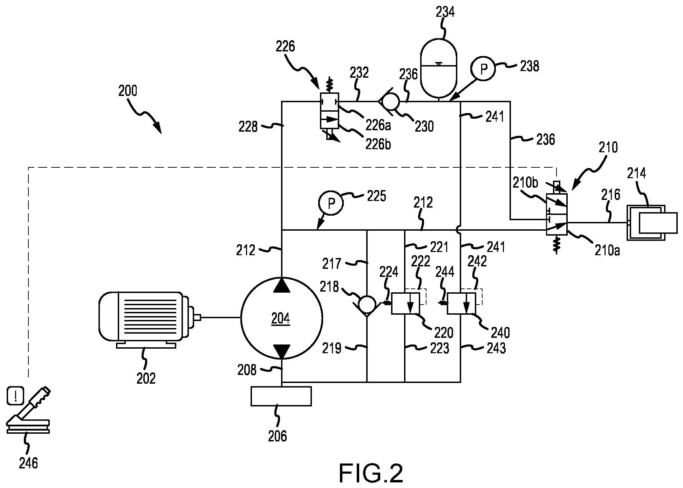

Referring now to FIG. 2, in accordance with various embodiments, a braking system 200 is illustrated. In various embodiments, the braking system 200 includes motor 202, which is mechanically coupled to hydraulic pump 204. In various embodiments, the motor 202 is an electric motor. In various embodiments, hydraulic pump 204 is fluidly coupled to hydraulic fluid flow source 206 via conduit 208. In various embodiments, hydraulic pump 204 is further fluidly coupled to directional control valve 210 via conduit 212. In various embodiments, the directional control valve 210 is a two-position control valve that may be either electronically controlled, e.g. a solenoid valve, or a mechanically controlled valve. In various embodiments, directional control valve 210, which is fluidly coupled to brake assembly 214 via conduit 216, controls the flow of hydraulic fluid to the brake assembly 214, i.e. each of the Has, from select sources, e.g. the hydraulic pump 204 or the accumulator 234, described hereafter.

In various embodiments, in operation, responsive to receiving a first command, e.g. an apply brake command, from a brake control unit, such as BCU 20 of FIG. 1A, the motor 202 is configured to rotate in a first direct direction that causes the hydraulic pump 204 to rotate in the same first direction. In various embodiments, the hydraulic pump 204 is configured to, during rotation in the first direction, receive hydraulic fluid from the hydraulic fluid flow source 206 and pump the hydraulic fluid to the directional control valve 210. In various embodiments, the directional control valve 210, being in a first position 210a, i.e. a braking position, as controlled by a parking control unit 246, is configured to allow the hydraulic fluid to flow to the brake assembly 214 thereby allowing the brake assembly 214 to apply a braking force.

In various embodiments, in operation, responsive to receiving a second command, e.g. a release brake command, from the BCU 20, the motor 202 is configured to rotate in a second direct direction, opposite the first direction, that causes the hydraulic pump 204 to rotate in the same second direction. In various embodiments, the hydraulic pump 204 is configured to, during rotation in the second direction, receive hydraulic fluid from the directional control valve 210 and pump the hydraulic fluid to the hydraulic fluid flow source 206. In various embodiments, the directional control valve 210, being in the first position 210a, is configured to allow the hydraulic fluid to drain from the brake assembly 214, thereby allowing the brake assembly 214 to release the braking force.

In various embodiments, the braking system 200 includes a check valve 218. In various embodiments, a first port of the check valve 218 is fluidly coupled to the conduit 212 between the hydraulic pump 204 and the directional control valve 210 via conduit 217. In various embodiments, a second port of the check valve 218 is fluidly coupled to the conduit 208 between the hydraulic pump 204 and the hydraulic fluid flow source 206 via conduit 219. In various embodiments, the check valve 218 is a one-way valve configured to allow the flow of hydraulic fluid to move only in one direction, i.e. from the hydraulic fluid flow source 206 to the directional control valve 210, while preventing the flow of hydraulic fluid from the directional control valve 210 to the hydraulic fluid flow source 206.

In various embodiments, the braking system 200 includes a relief valve 220. In various embodiments, a first port of the relief valve 220 is fluidly coupled to the conduit 212 between the hydraulic pump 204 and the directional control valve 210 via conduit 221. In various embodiments, a second port of the relief valve 220 is fluidly coupled to the conduit 208 between the hydraulic pump 204 and the hydraulic fluid flow source 206 via conduit 223. In various embodiments, the relief valve 220 is normally closed, i.e., non-flowing. In various embodiments, as pressure rises in the conduit 212, energy pushes around to a pilot line 222, but the relief valve 220 remains closed due to spring force 224. In various embodiments, as the pressure continues to increase, the energy pushing around the pilot line 222 increases thereby overcoming the spring force 224 and slowly open the relief valve 220. In various embodiments, a first pressure sensor 225 may be fluidly coupled to conduit 212 to monitor the pressure of the hydraulic fluid in conduit 212.

In various embodiments, the hydraulic pump 204 is further fluidly coupled to charging control valve 226 via conduit 212 and conduit 228. In various embodiments, the charging control valve 226 is fluidly coupled to a first port of a check valve 230 via conduit 232. In various embodiments, a second port of the check valve 230 is fluidly coupled to accumulator 234 via conduit 236. In various embodiments, the check valve 230 is a one-way valve configured to allow the flow of hydraulic fluid to move only in one direction, i.e. from the hydraulic pump 204 to the accumulator 234 via the charging control valve 226, while preventing the flow of hydraulic fluid from the accumulator 234 to the hydraulic pump 204 via the charging control valve 226. In various embodiments, the braking system 200 includes a second pressure sensor 238 that may be fluidly coupled to the conduit 236 to monitor the pressure of the hydraulic fluid in the conduit 236 and likewise the accumulator 234. In various embodiments, responsive to the second pressure sensor 238 detecting the pressure in the conduit 236 and thus, the accumulator 234, is between a first predetermined pressure and a second predetermined pressure, a command is sent, via the BCU 20 that monitors the second pressure sensor 238, to switch the charging control valve 226 to a first position 226a, i.e. a blocked position, thereby allowing the accumulator 234 to remain between the first predetermined pressure and the second predetermined pressure. In various embodiments, responsive to the second pressure sensor 238 detecting the pressure in the conduit 236 and thus, the accumulator 234, is below the first predetermined pressure, a command is sent, via the BCU 20 which monitors the second pressure sensor 238, to the charging control valve 226 to switch to a second position 226b, i.e. a charging position, thereby allowing hydraulic fluid to flow into and accumulate in the accumulator 234 up to or above the first predetermined pressure. In various embodiments, the charging control valve 226 may be commanded, by the BCU 20, to a first position 226a, i.e. a blocked position to block any charging flow, or to a second position 226b to enable charging, when needed, e.g. for operations of system initialization, progressively braking, among others.

In various embodiments, responsive to the second pressure sensor 238 detecting the pressure in the conduit 236 and thus, the accumulator 234, rises above the first predetermined pressure such that the pressure in the conduit 236 and accumulator 234 is between a first predetermined pressure and a second predetermined pressure, then a command is sent, via the BCU 20 which monitors the second pressure sensor 238, to switch the charging control valve 226 to the first position 226a, thereby allowing the accumulator 234 to remain between the first predetermined pressure and the second predetermined pressure. In an event that the pressure in at least one of the conduit 236 and accumulator 234 ever rises above the second predetermined pressure, in various embodiments, the braking system 200 includes a relief valve 240. In various embodiments, a first port of the relief valve 240 is fluidly coupled to the conduit 236 between the accumulator 234 and the directional control valve 210 via conduit 241. In various embodiments, a second port of the relief valve 240 is fluidly coupled to the conduit 208 between the hydraulic pump 204 and the hydraulic fluid flow source 206 via conduit 243. In various embodiments, the relief valve 240 is normally closed, i.e., non-flowing. In various embodiments, as pressure rises in the conduit 241, energy pushes around to a pilot line 242, but the relief valve 240 remains closed due to spring force 244. In various embodiments, as the pressure continues to increase, the energy pushing around the pilot line 242 increases thereby overcoming the spring force 244 and slowly open the relief valve 240 thereby allowing hydraulic fluid to flow from conduit 236 and accumulator 234 to the hydraulic fluid flow source 206.

In various embodiments, responsive to the aircraft coming to a standstill such that the aircraft is ready to be parked, responsive to a command being received from the parking control unit 246, the directional control valve 210 is switched to a second position 210b, i.e. a parking position. In various embodiments, the directional control valve 210, in the second position 210b is configured to allow hydraulic fluid to flow to the brake assembly 214 from the accumulator 234 thereby allowing the brake assembly 214 to apply constant braking force as per the hydraulic fluid pressure in the accumulator 234, the conduit 236, and the conduit 216 based on the hydraulic fluid pressure in the accumulator 234. In various embodiments, the parking control unit 246 in conjunction with the BCU 20, may be configured to keep the charging control valve 226 in the first position 226a, anytime the directional control valve 210 is in the second position 210b.

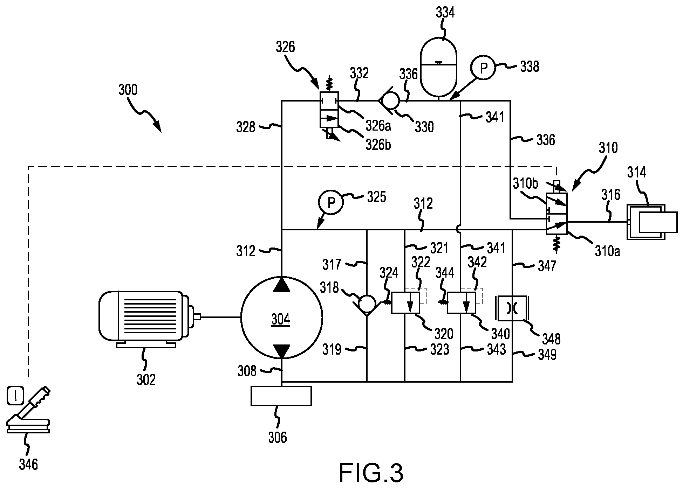

Referring now to FIG. 3, in accordance with various embodiments, a braking system 300 is illustrated. In various embodiments, the braking system 300 includes motor 302 is mechanically coupled to hydraulic pump 304. In various embodiments, the motor 302 is an electric motor. In various embodiments, hydraulic pump 304 is fluidly coupled to hydraulic fluid flow source 306 via conduit 308. In various embodiments, hydraulic pump 304 is further fluidly coupled to directional control valve 310 via conduit 312. In various embodiments, the directional control valve 310 is a two-position control valve that may be either electronically controlled, e.g. a solenoid valve, or a mechanically controlled valve. In various embodiments, directional control valve 310, which is fluidly coupled to brake assembly 314 via conduit 316, controls the flow of hydraulic fluid to the brake assembly 314, i.e. each of the Has, from select sources, e.g. the hydraulic pump 304 or the accumulator 334, described hereafter.

In various embodiments, in operation, responsive to receiving a first command, e.g. an apply brake command, from a brake control unit, such as brake control unit (BCU) 20 of FIG. 1A, the motor 302 is configured to rotate in a first direct direction that causes the hydraulic pump 304 to rotate in the same first direction. In various embodiments, the hydraulic pump 304 is configured to, during rotation in the first direction, receive hydraulic fluid from the hydraulic fluid flow source 306 and pump the hydraulic fluid to the directional control valve 310. In various embodiments, the directional control valve 310, being in a first position 310a, i.e. a braking position, as controlled by a parking control unit 346, is configured to allow the hydraulic fluid to flow to the brake assembly 314 thereby allowing the brake assembly 314 to apply a braking force.

In various embodiments, in operation, responsive to receiving a second command, e.g. a release brake command, from the BCU 20, the motor 302 is configured to rotate in a second direct direction, opposite the first direction, that causes the hydraulic pump 304 to rotate in the same second direction. In various embodiments, the hydraulic pump 304 is configured to, during rotation in the second direction, receive hydraulic fluid from the directional control valve 310 and pump the hydraulic fluid to the hydraulic fluid flow source 306. In various embodiments, the directional control valve 310, being in the first position 310a, is configured to allow the hydraulic fluid to drain from the brake assembly 314 thereby allowing the brake assembly 314 to release the braking force.

In various embodiments, the braking system 300 includes a check valve 318. In various embodiments, a first port of the check valve 318 is fluidly coupled to the conduit 312 between the hydraulic pump 304 and the directional control valve 310 via conduit 317. In various embodiments, a second port of the check valve 318 is fluidly coupled to the conduit 308 between the hydraulic pump 304 and the hydraulic fluid flow source 306 via conduit 319. In various embodiments, the check valve 318 is a one-way valve configured to allow the flow of hydraulic fluid to move only in one direction, i.e. from the hydraulic fluid flow source 306 to the directional control valve 310, while preventing the flow of hydraulic fluid from the directional control valve 310 to the hydraulic fluid flow source 306.

In various embodiments, the braking system 300 includes a relief valve 320. In various embodiments, a first port of the relief valve 320 is fluidly coupled to the conduit 312 between the hydraulic pump 304 and the directional control valve 310 via conduit 321. In various embodiments, a second port of the relief valve 320 is fluidly coupled to the conduit 308 between the hydraulic pump 304 and the hydraulic fluid flow source 306 via conduit 323. In various embodiments, the relief valve 320 is normally closed, i.e., non-flowing. In various embodiments, as pressure rises in the conduit 312, energy pushes around to a pilot line 322, but the relief valve 320 remains closed due to spring force 324. In various embodiments, as the pressure continues to increase, the energy pushing around the pilot line 322 increases thereby overcoming the spring force 324 and slowly open the relief valve 320. In various embodiments, a first pressure sensor 325 may be fluidly coupled to conduit 312 to monitor the pressure of the hydraulic fluid in conduit 312.

In difference to FIG. 2, in various embodiments, the braking system 300 of FIG. 3 includes servo flow-control valve 348. In various embodiments, a first port of servo flow-control valve 348 is fluidly coupled to the conduit 312 between the hydraulic pump 304 and the directional control valve 310 via conduit 347. In various embodiments, a second port of the servo flow-control valve 348 is fluidly coupled to the conduit 308 between the hydraulic pump 304 and the hydraulic fluid flow source 306 via conduit 349. In various embodiments, the servo flow-control valve 348, when commanded by the BCU 20, may be configured to allow a portion of the hydraulic flow being pumped by the hydraulic pump 304 to the directional control valve 310 or a portion of hydraulic fluid flow received from the brake assembly 314, to flow back to the hydraulic fluid flow source 306. In that regard, in various embodiments, response to the amount of hydraulic fluid being pumped from the hydraulic pump 304 to the directional control valve 310 being determined by the BCU 20 to be more or less than required for a detected condition, e.g. a current speed of the aircraft, the BCU 20 may send a command to the servo flow-control valve 348. In various embodiments, the command from the BCU 20 may cause the servo flow-control valve 348 to open thereby allowing a portion of the hydraulic flow being pumped from the hydraulic pump 304 to the directional control valve 310 to be sent back to the hydraulic fluid flow source 306 and send only the required amount of hydraulic fluid to the directional control valve 310 and then to the brake assembly 314. In various embodiments, the command from the BCU 20 may cause the servo flow-control valve 348 to open thereby allowing a portion of the hydraulic flow received from the brake assembly 314 via the directional control valve 310 to be sent back to the hydraulic fluid flow source 306 or to draw only the required amount of hydraulic fluid from the hydraulic pump 304.

In various embodiments, the hydraulic pump 304 is further fluidly coupled to charging control valve 326 via conduit 312 and conduit 328. In various embodiments, the charging control valve 326 is fluidly coupled to a first port of a check valve 330 via conduit 332. In various embodiments, a second port of the check valve 330 is fluidly coupled to accumulator 334 via conduit 336. In various embodiments, the check valve 330 is a one-way valve configured to allow the flow of hydraulic fluid to move only in one direction, i.e. from the hydraulic pump 304 to the accumulator 334 via the charging control valve 326, while preventing the flow of hydraulic fluid from the accumulator 334 to the hydraulic pump 304 via the charging control valve 326. In various embodiments, the braking system 300 includes a second pressure sensor 338 that may be fluidly coupled to the conduit 336 to monitor the pressure of the hydraulic fluid in the conduit 336 and likewise the accumulator 334. In various embodiments, responsive to the second pressure sensor 338 detecting the pressure in the conduit 336 and thus, the accumulator 334, is between a first predetermined pressure and a second predetermined pressure, a command is sent, via the BCU 20 which monitors the second pressure sensor 338, to switch the charging control valve 326 to a first position 326a, i.e. a blocked position, thereby allowing the accumulator 334 to remain between the first predetermined pressure and the second predetermined pressure. In various embodiments, responsive to the second pressure sensor 338 detecting the pressure in the conduit 336 and thus, the accumulator 334, is below the first predetermined pressure, a command is sent, via the BCU 20 which monitors the second pressure sensor 338, to the charging control valve 326 to switch to a second position 326b, i.e. a charging position, thereby allowing hydraulic fluid to flow into and accumulate in the accumulator 334 up to or above the first predetermined pressure. In various embodiments, the charging control valve 226 may be commanded, by the BCU 20, to a first position 226a, i.e. a blocked position to block any charging flow, or to a second position 226b to enable charging, when it is needed, e.g. for operations of system initialization, progressively braking, among others.

In various embodiments, responsive to the second pressure sensor 338 detecting the pressure in the conduit 336 and thus, the accumulator 334, rises above the first predetermined pressure such that the pressure in the conduit 336 and accumulator 334 is between a first predetermined pressure and a second predetermined pressure, then a command is sent, via the BCU 20 which monitors the second pressure sensor 338, to switch the charging control valve 326 to a first position 326a, thereby allowing the accumulator 334 to remain between the first predetermined pressure and the second predetermined pressure. In an event that the pressure in at least one of the conduit 336 and accumulator 334 ever rises above the second predetermined pressure, in various embodiments, the braking system 300 includes a relief valve 340. In various embodiments, a first port of the relief valve 340 is fluidly coupled to the conduit 336 between the accumulator 334 and the directional control valve 310 via conduit 341. In various embodiments, a second port of the relief valve 340 is fluidly coupled to the conduit 308 between the hydraulic pump 304 and the hydraulic fluid flow source 306 via conduit 343. In various embodiments, the relief valve 340 is normally closed, i.e., non-flowing. In various embodiments, as pressure rises in the conduit 341, energy pushes around to a pilot line 342, but the relief valve 340 remains closed due to spring force 344. In various embodiments, as the pressure continues to increase, the energy pushing around the pilot line 342 increases thereby overcoming the spring force 344 and slowly open the relief valve 340 thereby allowing hydraulic fluid to flow from conduit 336 and accumulator 334 to the hydraulic fluid flow source 306.

In various embodiments, responsive to the aircraft coming to a standstill such that the aircraft is ready to be parked, responsive to a command being received from the parking control unit 346, the directional control valve 310 is switched to a second position 310b, i.e. a parking position. In various embodiments, the directional control valve 310, in the second position 310b is configured to allow hydraulic fluid to flow to the brake assembly 314 from the accumulator 334 thereby allowing the brake assembly 314 to apply constant braking force as per the hydraulic fluid pressure in the accumulator 334, the conduit 336, and the conduit 316 based on the hydraulic fluid pressure in the accumulator 334. In various embodiments, the parking control unit 346 in conjunction with the BCU 20, may be configured to keep the charging control valve 326 in the first position 326a, anytime the directional control valve 310 is in the second position 310b.

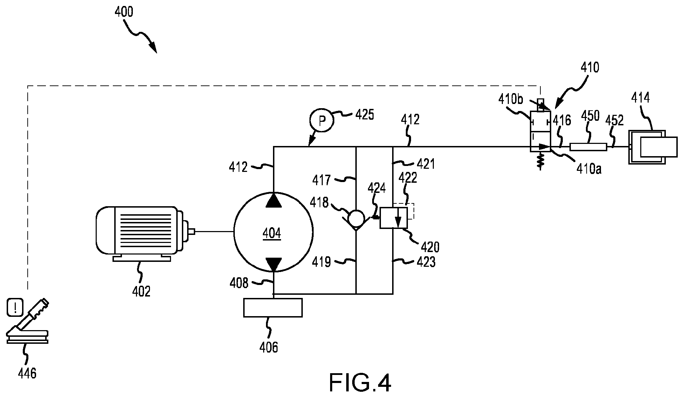

Referring now to FIG. 4, in accordance with various embodiments, a braking system 400 is illustrated. In various embodiments, the braking system 400 includes motor 402 is mechanically coupled to hydraulic pump 404. In various embodiments, the motor 402 is an electric motor. In various embodiments, hydraulic pump 404 is fluidly coupled to hydraulic fluid flow source 406 via conduit 408. In various embodiments, hydraulic pump 404 is further fluidly coupled to directional control valve 410 via conduit 412. In various embodiments, the directional control valve 410 is a two-position control valve that may be either electronically controlled, e.g. a solenoid valve, or a mechanically controlled valve. In various embodiments, directional control valve 410, which is fluidly coupled to brake assembly 414 via conduit 416, expandible/compressible hose 450 and conduit 452, controls the flow of hydraulic fluid to the brake assembly 414, i.e. each of the HAs, from the hydraulic pump 404.

In various embodiments, in operation, responsive to receiving a first command, e.g. an apply brake command, from a brake control unit, such as brake control unit (BCU) 20 of FIG. 1A, the motor 402 is configured to rotate in a first direct direction that causes the hydraulic pump 404 to rotate in the same first direction. In various embodiments, the hydraulic pump 404 is configured to, during rotation in the first direction, receive hydraulic fluid from the hydraulic fluid flow source 406 and pump the hydraulic fluid to the directional control valve 410. In various embodiments, the directional control valve 410, being in a first position 410a, i.e. a braking position, as controlled by a parking control unit 446, is configured to allow the hydraulic fluid to flow to the brake assembly 414 thereby allowing the brake assembly 414 to apply a braking force. In various embodiments, the expandible/compressible hose 450, which is fluidly coupled between conduit 416 and conduit 452, is configured to expand to a predetermined expansion diameter while hydraulic fluid is being pumped to the directional control valve 410.

In various embodiments, in operation, responsive to receiving a second command, e.g. a release brake command, from the BCU 20, the motor 402 is configured to rotate in a second direct direction, opposite the first direction, that causes the hydraulic pump 404 to rotate in the same second direction. In various embodiments, the hydraulic pump 404 is configured to, during rotation in the second direction, receive hydraulic fluid from the directional control valve 410 and pump the hydraulic fluid to the hydraulic fluid flow source 406. In various embodiments, the directional control valve 410, being in the first position 410a, is configured to allow the hydraulic fluid to drain from the brake assembly 414 thereby allowing the brake assembly 414 to release the braking force.

In various embodiments, the braking system 400 includes a check valve 418. In various embodiments, a first port of the check valve 418 is fluidly coupled to the conduit 412 between the hydraulic pump 404 and the directional control valve 410 via conduit 417. In various embodiments, a second port of the check valve 418 is fluidly coupled to the conduit 408 between the hydraulic pump 404 and the hydraulic fluid flow source 406 via conduit 419. In various embodiments, the check valve 418 is a one-way valve configured to allow the flow of hydraulic fluid to move only in one direction, i.e. from the hydraulic fluid flow source 406 to the directional control valve 410, while preventing the flow of hydraulic fluid from the directional control valve 410 to the hydraulic fluid flow source 406.

In various embodiments, the braking system 400 includes a relief valve 420. In various embodiments, a first port of the relief valve 420 is fluidly coupled to the conduit 412 between the hydraulic pump 404 and the directional control valve 410 via conduit 421. In various embodiments, a second port of the relief valve 420 is fluidly coupled to the conduit 408 between the hydraulic pump 404 and the hydraulic fluid flow source 406 via conduit 423. In various embodiments, the relief valve 420 is normally closed, i.e., non-flowing. In various embodiments, as pressure rises in the conduit 412, energy pushes around to a pilot line 422, but the relief valve 420 remains closed due to spring force 424. In various embodiments, as the pressure continues to increase, the energy pushing around the pilot line 422 increases thereby overcoming the spring force 424 and slowly open the relief valve 420. In various embodiments, a first pressure sensor 425 may be fluidly coupled to conduit 412 to monitor the pressure of the hydraulic fluid in conduit 412 thereby allowing hydraulic fluid to flow from conduit 412 to the hydraulic fluid flow source 406.

In various embodiments, responsive to the aircraft coming to a standstill such that the aircraft is ready to be parked and the first command, e.g. the apply brake command is still being applied, hydraulic fluid is still flowing to the brake assembly 414 thereby allowing the brake assembly 414 to apply a braking force and allowing the expandible/compressible hose 450 to expand to the predetermined expansion diameter while hydraulic fluid is still flowing. Responsive to a command being received from the parking control unit 446, in various embodiments, the directional control valve 410 switches to a second position 410b, i.e. a parking position. In various embodiments, the directional control valve 410, in the second position 410b, is configured to block hydraulic fluid from flowing to or from the brake assembly 414. In that regard, the expandible/compressible hose 450 is configured to provide a constant hydraulic pressure to the brake assembly 414 required to keep the aircraft parked via a compression of the expandible/compressible hose 450.

Accordingly, an electro-hydrostatic-actuator (EHA) braking system is provided in which both of hydraulic and electric actuation technologies are integrated. In various embodiments, responsive to a command to apply a brake or release the brake, the electric motor is commanded to drive the hydraulic pump to either feed hydraulic oil into or drain hydraulic oil from brake cylinders of the brake assembly such that brake is either applied or released. In various embodiments, a parking control unit of the EHA braking system is equipped to pre-store energy which may be applied for parking brake when the electric motor is no longer commanded to drive the hydraulic pump.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching within the limitations defined by the appended claims.

## Claims

1. A brake system, comprising:
a motor (202);
a hydraulic pump (204) mechanically coupled to the motor;
a directional control valve (210) fluidly coupled to the hydraulic pump; and
a brake assembly (214) fluidly coupled to the directional control valve,
wherein the directional control valve is moveable between a braking position, in which the directional control valve allows hydraulic fluid to flow between the hydraulic pump and the brake assembly, and a parking position, in which the directional control valve prevents the hydraulic fluid from flowing between the hydraulic pump and the brake assembly;
**characterised in that**,
responsive to a first command from a brake control unit (20), the motor (202) is configured to cause the brake assembly to apply a braking force by rotating the hydraulic pump (204) in a first direction to pump the hydraulic fluid to the brake assembly via the directional control valve (210) when the directional control valve is in the braking position; and
wherein responsive to a second command from the brake control unit, the motor is configured to cause the brake assembly to release the braking force by rotating the hydraulic pump in a second direction to pump the hydraulic fluid from the brake assembly to a hydraulic fluid flow source via the directional control valve when the directional control valve is in the braking position.

2. The brake system of claim 1, further comprising:
a charging control valve (226) fluidly coupled to the hydraulic pump (204); and
an accumulator (234) fluidly coupled to the charging control valve,
wherein, responsive to the hydraulic pump rotating in a first direction and a hydraulic pressure in the accumulator being below a first predetermined accumulator pressure, the charging control valve is configured to be in a charging position allowing the hydraulic fluid to flow into and accumulate in the accumulator.

3. The brake system of claim 2:
wherein, responsive to the hydraulic pressure in the accumulator (234) being at or above the first predetermined accumulator pressure or to prevent the accumulator from being charged, the charging control valve (226) is configured to be in a blocked position preventing the hydraulic fluid into the accumulator.

4. The brake system of claim 1, 2 or 3, further comprising:
a first relief valve (220) comprising a first port and a second port,
wherein the first port is fluidly coupled to a first conduit (212) between the hydraulic pump (204) and the directional control valve (210),
wherein the second port is fluidly coupled to a second conduit (208) between the hydraulic pump (204) and a hydraulic fluid flow source (206), and
wherein, responsive to energy of a hydraulic pressure pushing around a pilot line of the first relief valve increasing and overcoming a spring force of the first relief valve, the first relief valve is configured to open allowing the hydraulic fluid to flow from the hydraulic pump and the directional control valve to the hydraulic fluid flow source.

5. The brake system of any preceding claim, further comprising:
an accumulator (234) fluidly coupled to the directional control valve (210),
wherein the directional control valve is configured to fluidly couple the accumulator to the brake assembly in the parking position to allow the accumulator to provide a constant hydraulic pressure to the brake assembly based on a hydraulic fluid pressure in the accumulator.

6. The brake system of claim 5:
further comprising a second relief valve (240) comprising a first port and a second port,
wherein the first port is fluidly coupled to a first conduit (236) between the accumulator and the directional control valve,
wherein the second port is fluidly coupled to a second conduit (208) between the hydraulic pump (204) and a hydraulic fluid flow source, and
wherein, responsive to energy of a hydraulic pressure pushing around a pilot line of the second relief valve increasing and overcoming a spring force of the second relief valve, the second relief valve is configured to open allowing the hydraulic fluid to flow from the accumulator and the directional control valve to the hydraulic fluid flow source.

7. The brake system of any preceding claim, further comprising:
an expandible/compressible hose (450) fluidly coupled between the directional control valve (210) and the brake assembly,
wherein, responsive to the directional control valve moving to the parking position, the expandible/compressible hose, in an expanded configuration, is configured to provide a constant hydraulic pressure to the brake assembly via a compression of the expandible/compressible hose.

8. The brake system of any preceding claim, further comprising:
a servo flow-control valve (348) comprising a first port and a second port,
wherein the first port is fluidly coupled to the hydraulic pump (304) and the directional control valve (310),
wherein the second port is fluidly coupled to a hydraulic fluid flow source (306), and
wherein, responsive to receiving a command by a brake control unit, the servo flow-control valve is configured to allow a first portion of hydraulic fluid flow being pumped by the hydraulic pump to the brake assembly via the directional control valve to flow to the hydraulic fluid flow source or to allow a second portion of hydraulic fluid flow being drained from the brake assembly via the directional control valve to flow to the hydraulic fluid flow source.

9. The brake system of any of claims 1 to 7, further comprising:
a check valve (330) comprising a first port and a second port,
wherein the first port is fluidly coupled to the hydraulic pump (304) and the directional control valve (310),
wherein the second port is fluidly coupled to a hydraulic fluid flow source (306), and
wherein the check valve is a one-way valve configured to allow a flow of hydraulic fluid from the hydraulic fluid flow source to the hydraulic pump and the directional control valve while preventing the flow of hydraulic fluid from the directional control valve and the hydraulic pump to the hydraulic fluid flow source.

10. An aircraft, comprising:
a wheel (104); and
the brake system of any preceding claim coupled to the wheel.

## Patentansprüche

1. Bremssystem, umfassend:
einen Motor (202);
eine mit dem Motor mechanisch gekoppelte Hydraulikpumpe (204);
ein mit der Hydraulikpumpe fluidisch gekoppeltes Wegeventil (210) und
eine mit dem Wegeventil fluidisch gekoppelte Bremsanordnung (214),
wobei das Wegeventil zwischen einer Bremsstellung, in der das Wegeventil den Durchfluss eines Hydraulikfluids zwischen der Hydraulikpumpe und der Bremsanordnung ermöglicht, und einer Parkstellung, in der das Wegeventil den Durchfluss des Hydraulikfluids zwischen der Hydraulikpumpe und der Bremsanordnung verhindert, bewegbar ist;
**gekennzeichnet dadurch, dass** der Motor (202) als Reaktion auf ein erstes Kommando einer Bremssteuereinheit (20) derart ausgebildet ist, dass er die Bremsanordnung zum Aufbringen einer Bremskraft antreibt, indem er die Hydraulikpumpe (204) in einer ersten Drehrichtung antreibt, um das Hydraulikfluid über das Wegeventil (210) an die Bremsanordnung zu fördern, wenn sich das Wegeventil in der Bremsstellung befindet, und
wobei der Motor als Reaktion auf ein zweites Kommando der Bremssteuereinheit derart ausgebildet ist, dass er die Bremsanordnung zum Lösen der Bremskraft antreibt, indem er die Hydraulikpumpe in einer zweiten Drehrichtung antreibt, um das Hydraulikfluid von der Bremsanordnung über das Wegeventil zu einer Hydraulikfluidquelle zu fördern, wenn sich das Wegeventil in der Bremsstellung befindet.

2. Bremssystem nach Anspruch 1, ferner umfassend:
ein mit der Hydraulikpumpe (204) fluidisch gekoppeltes Ladeventil (226) und
einen mit dem Ladeventil fluidisch gekoppelten Druckspeicher (234),
wobei das Ladeventil als Reaktion auf eine Rotation der Hydraulikpumpe in einer ersten Richtung und einen unterhalb eines ersten vordefinierten Speicherdrucks liegenden Hydraulikdruck im Druckspeicher derart ausgebildet ist, dass es sich in einer Ladestellung befindet, in der das Hydraulikfluid in den Druckspeicher eintreten und sich darin ansammeln kann.

3. Bremssystem nach Anspruch 2:
wobei das Ladeventil (226) derart ausgebildet ist, dass es sich in einer Sperrstellung befindet, um das Eindringen des Hydraulikfluids in den Druckspeicher zu verhindern, wenn der Hydraulikdruck im Druckspeicher (234) gleich oder größer als der erste vordefinierte Speicherdruck ist oder um das Laden des Druckspeichers zu verhindern.

4. Bremssystem nach einem der Ansprüche 1, 2 bis 3, ferner umfassend:
ein erstes Druckbegrenzungsventil (220) mit einem ersten Anschluss und einem zweiten Anschluss,
wobei der erste Anschluss fluidisch mit einer ersten Leitung (212) zwischen der Hydraulikpumpe (204) und dem Wegeventil (210) gekoppelt ist,
wobei der zweite Anschluss fluidisch mit einer zweiten Leitung (208) zwischen der Hydraulikpumpe (204) und einer Hydraulikfluidquelle (206) gekoppelt ist, und
wobei das erste Druckbegrenzungsventil derart ausgebildet ist, dass es öffnet, wenn die durch eine Pilotleitung auf das Ventil wirkende Hydraulikdruckenergie die Federkraft des Ventils übersteigt, wodurch das Hydraulikfluid von der Hydraulikpumpe und dem Wegeventil zur Hydraulikfluidquelle strömen kann.

5. Bremssystem nach einem der vorhergehenden Ansprüche, ferner umfassend:
einen Druckspeicher (234), der fluidisch mit dem Wegeventil (210) gekoppelt ist,
wobei das Wegeventil derart ausgebildet ist, dass es in der Parkstellung den Druckspeicher fluidisch mit der Bremsanordnung koppelt, um der Bremsanordnung einen konstanten Hydraulikdruck in Abhängigkeit vom Hydraulikdruck im Druckspeicher bereitzustellen.

6. Bremssystem nach Anspruch 5:
ferner umfassend ein zweites Druckbegrenzungsventil (240) mit einem ersten Anschluss und einem zweiten Anschluss,
wobei der erste Anschluss fluidisch mit einer ersten Leitung (236) zwischen dem Druckspeicher und dem Wegeventil gekoppelt ist,
wobei der zweite Anschluss fluidisch mit einer zweiten Leitung (208) zwischen der Hydraulikpumpe (204) und einer Hydraulikfluidquelle gekoppelt ist, und
wobei das zweite Druckbegrenzungsventil derart ausgebildet ist, dass es öffnet, wenn die durch eine Pilotleitung auf das Ventil wirkende Hydraulikdruckenergie die Federkraft des Ventils übersteigt, wodurch das Hydraulikfluid vom Druckspeicher und dem Wegeventil zur Hydraulikfluidquelle strömen kann.

7. Bremssystem nach einem der vorhergehenden Ansprüche, ferner umfassend:
einen expandierbaren / kompressiblen Schlauch (450), der fluidisch zwischen dem Wegeventil (210) und der Bremsanordnung gekoppelt ist,
wobei, als Reaktion darauf, dass das Richtungssteuerventil in die Parkposition bewegt wird, der expandierbare/komprimierbare Schlauch in einer expandierten Konfiguration dazu eingerichtet ist, durch eine Kompression des expandierbaren/komprimierbaren Schlauchs einen konstanten hydraulischen Druck an die Bremsanordnung bereitzustellen.

8. Bremssystem nach einem der vorhergehenden Ansprüche, ferner umfassend:
ein Servodurchflussregelventil (348) mit einem ersten Anschluss und einem zweiten Anschluss,
wobei der erste Anschluss fluidisch mit der Hydraulikpumpe (304) und dem Wegeventil (310) gekoppelt ist,
wobei der zweite Anschluss fluidisch mit einer Hydraulikfluidquelle (306) gekoppelt ist, und
wobei das Servodurchflussregelventil als Reaktion auf ein Kommando einer Bremssteuereinheit derart ausgebildet ist, dass es einen ersten Teil des von der Hydraulikpumpe über das Wegeventil an die Bremsanordnung geförderten Hydraulikfluidstroms zur Hydraulikfluidquelle leitet oder einen zweiten Teil des von der Bremsanordnung über das Wegeventil abgeführten Hydraulikfluidstroms zur Hydraulikfluidquelle leitet.

9. Bremssystem nach einem der Ansprüche 1 bis 7, ferner umfassend:
ein Rückschlagventil (330) mit einem ersten Anschluss und einem zweiten Anschluss,
wobei der erste Anschluss fluidisch mit der Hydraulikpumpe (304) und dem Wegeventil (310) gekoppelt ist,
wobei der zweite Anschluss fluidisch mit einer Hydraulikfluidquelle (306) gekoppelt ist, und
wobei das Rückschlagventil als Einwegventil derart ausgebildet ist, dass es einen Durchfluss des Hydraulikfluids von der Hydraulikfluidquelle zur Hydraulikpumpe und zum Wegeventil ermöglicht, während es den Durchfluss des Hydraulikfluids vom Wegeventil und von der Hydraulikpumpe zur Hydraulikfluidquelle verhindert.

10. Luftfahrzeug, umfassend:
ein Rad (104); und
das Bremssystem nach einem der vorhergehenden Ansprüche, das mit dem Rad gekoppelt ist.

## Revendications

1. Système de freinage, comprenant :
un moteur (202) ;
une pompe hydraulique (204) couplée mécaniquement au moteur ;
une vanne de commande directionnelle (210) couplée fluidiquement à la pompe hydraulique ; et
un ensemble de freinage (214) couplé fluidiquement à la vanne de commande directionnelle,
dans lequel la vanne de commande directionnelle peut être déplacée entre une position de freinage, dans laquelle la vanne de commande directionnelle permet à du fluide hydraulique de s'écouler entre la pompe hydraulique et l'ensemble de freinage, et une position de stationnement, dans laquelle la vanne de commande directionnelle empêche le fluide hydraulique de s'écouler entre la pompe hydraulique et l'ensemble de freinage ;
**caractérisé en ce que**, en réponse à une première commande d'une unité de commande de freinage (20), le moteur (202) est configuré pour amener l'ensemble de freinage à appliquer une force de freinage en faisant tourner la pompe hydraulique (204) dans une première direction pour pomper le fluide hydraulique vers l'ensemble de freinage par l'intermédiaire de la vanne de commande directionnelle (210) lorsque la vanne de commande directionnelle est dans la position de freinage ; et
dans lequel, en réponse à une seconde commande de l'unité de commande de freinage, le moteur est configuré pour amener l'ensemble de freinage à relâcher la force de freinage en faisant tourner la pompe hydraulique dans une seconde direction pour pomper le fluide hydraulique de l'ensemble de freinage vers une source de flux de fluide hydraulique par l'intermédiaire de la vanne de commande directionnelle lorsque la vanne de commande directionnelle est dans la position de freinage.

2. Système de freinage selon la revendication 1, comprenant également :
une vanne de commande de charge (226) couplée fluidiquement à la pompe hydraulique (204) ; et
un accumulateur (234) couplé fluidiquement à la vanne de commande de charge,
dans lequel, en réponse à la rotation de la pompe hydraulique dans une première direction et à une pression hydraulique dans l'accumulateur inférieure à une première pression d'accumulateur prédéterminée, la vanne de commande de charge est configurée pour se trouver dans une position de charge permettant au fluide hydraulique de s'écouler et de s'accumuler dans l'accumulateur.

3. Système de freinage selon la revendication 2 :
dans lequel, en réponse à la pression hydraulique dans l'accumulateur (234) étant égale ou supérieure à la première pression d'accumulateur prédéterminée ou pour empêcher la charge de l'accumulateur, la vanne de commande de charge (226) est configurée pour être dans une position bloquée empêchant le fluide hydraulique de pénétrer dans l'accumulateur.

4. Système de freinage selon la revendication 1, 2 ou 3, comprenant également :
une première soupape de décharge (220) comprenant un premier orifice et un second orifice,
dans lequel le premier orifice est couplé fluidiquement à un premier conduit (212) entre la pompe hydraulique (204) et la vanne de commande directionnelle (210),
dans lequel le second orifice est couplé fluidiquement à un second conduit (208) entre la pompe hydraulique (204) et une source de flux de fluide hydraulique (206), et
dans lequel, en réponse à de l'énergie d'une pression hydraulique poussant autour d'une ligne pilote de la première soupape de décharge augmentant et surmontant une force de ressort de la première soupape de décharge, la première soupape de décharge est configurée pour s'ouvrir, permettant au fluide hydraulique de s'écouler de la pompe hydraulique et de la vanne de commande directionnelle vers la source de flux de fluide hydraulique.

5. Système de freinage selon une quelconque revendication précédente, comprenant également :
un accumulateur (234) couplé fluidiquement à la vanne de commande directionnelle (210),
dans lequel la vanne de commande directionnelle est configurée pour coupler fluidiquement l'accumulateur à l'ensemble de freinage dans la position de stationnement pour permettre à l'accumulateur de fournir une pression hydraulique constante à l'ensemble de freinage sur la base d'une pression de fluide hydraulique dans l'accumulateur.

6. Système de freinage selon la revendication 5 :
comprenant également une seconde soupape de décharge (240) comprenant un premier orifice et un second orifice,
dans lequel le premier orifice est couplé fluidiquement à un premier conduit (236) entre l'accumulateur et la vanne de commande directionnelle,
dans lequel le second orifice est couplé fluidiquement à un second conduit (208) entre la pompe hydraulique (204) et une source de flux de fluide hydraulique, et
dans lequel, en réponse à de l'énergie d'une pression hydraulique poussant autour d'une ligne pilote de la seconde soupape de décharge augmentant et surmontant une force de ressort de la seconde soupape de décharge, la seconde soupape de décharge est configurée pour s'ouvrir, permettant au fluide hydraulique de s'écouler de l'accumulateur et de la vanne de commande directionnelle vers la source de flux de fluide hydraulique.

7. Système de freinage selon une quelconque revendication précédente, comprenant également :
un tuyau extensible/compressible (450) couplé fluidiquement entre la vanne de commande directionnelle (210) et l'ensemble de freinage,
dans lequel, en réponse au déplacement de la vanne de commande directionnelle vers la position de stationnement, le tuyau extensible/compressible, dans une configuration étendue, est configuré pour fournir une pression hydraulique constante à l'ensemble de freinage par l'intermédiaire d'une compression du tuyau extensible/compressible.

8. Système de freinage selon une quelconque revendication précédente, comprenant également :
une servovanne de commande de flux (348) comprenant un premier orifice et un second orifice,
dans lequel le premier orifice est couplé fluidiquement à la pompe hydraulique (304) et à la vanne de commande directionnelle (310),
dans lequel le second orifice est couplé fluidiquement à une source de flux de fluide hydraulique (306), et
dans lequel, en réponse à la réception d'une commande par une unité de commande de freinage, la servovanne de commande de flux est configurée pour permettre à une première partie de flux de fluide hydraulique pompé par la pompe hydraulique vers l'ensemble de freinage par l'intermédiaire de la vanne de commande directionnelle de s'écouler vers la source de flux de fluide hydraulique ou pour permettre à une seconde partie de flux de fluide hydraulique drainé depuis l'ensemble de freinage par l'intermédiaire de la vanne de commande directionnelle de s'écouler vers la source de flux de fluide hydraulique.

9. Système de freinage selon l'une quelconque des revendications 1 à 7, comprenant également :
un clapet anti-retour (330) comprenant un premier orifice et un second orifice,
dans lequel le premier orifice est couplé fluidiquement à la pompe hydraulique (304) et à la vanne de commande directionnelle (310),
dans lequel le second orifice est couplé fluidiquement à une source de flux de fluide hydraulique (306), et
dans lequel le clapet anti-retour est un clapet unidirectionnel configuré pour permettre un écoulement de fluide hydraulique de la source de flux de fluide hydraulique vers la pompe hydraulique et la vanne de commande directionnelle tout en empêchant l'écoulement de fluide hydraulique de la vanne de commande directionnelle et de la pompe hydraulique vers la source de flux de fluide hydraulique.

10. Aéronef, comprenant :
une roue (104) ; et
le système de freinage selon une quelconque revendication précédente couplé à la roue.
